# EUROPÄISCHE PATENTANMELDUNG

(11) **EP 2 463 314 A1**
(43) Veröffentlichungstag der Anmeldung: **13.06.2012**
(21) Anmeldenummer: 10194535.0
(22) Anmeldetag: 10.12.2010
(51) Int. Cl.: C08F 8/14, C04B 24/26, C04B 40/00, C04B 28/00

(54) **Herstellung von Kammpolymeren durch Veresterung**

(71) Anmelder: Sika Technology AG, 6340 Baar (CH)
(72) Erfinder: Sulser, Ueli, 8103 Unterengstringen (CH); Frunz, Lukas, 8057 Zürich (CH); Zimmermann, Jörg, 8046 Zürich (CH); Weidmann, Jürg, 8606 Greifensee (CH)
(74) Vertreter: Sika Patent Attorneys

(57) **Zusammenfassung**

Die Erfindung betrifft ein Verfahren zur Herstellung von Kammpolymeren, wobei mindestens eine Polycarbonsäure oder ein Salz davon mit mindestens einem Monohydroxypolyether verestert wird, umfassend die Schritte:

(a) Bereitstellen eines Reaktionsgemischs, dass mindestens eine Polycarbonsäure enthält,
(b) Erwärmen des Reaktionsgemischs auf mindestens 80°C,
(c) Zugeben einer Base und
(d) Verestern bei einer Reaktionstemperatur von mindestens 80°C unter Erhalt des Kammpolymers,

wobei dem Reaktionsgemisch in Schritt (a) und/oder (b) mindestens ein Monohydroxypolyether zugegeben wird.

Die Erfindung betrifft auch Kammpolymere, Zementzusammensetzungen, Formkörper und Verwendungen von Kammpolymeren.

## Beschreibung

Die Erfindung betrifft Verfahren zur Herstellung von Kammpolymeren durch Veresterung. Die Erfindung betrifft auch Kammpolymere, kammpolymerhaltige Zusammensetzungen, hydraulisch abbindende Zementzusammensetzungen und Formkörper sowie Verwendungen der Kammpolymere und kammpolymerhaltigen Zusammensetzungen.

### Stand der Technik

Kammpolymere aus Carbonsäurepolymeren mit Polyalkylenglykol-Seitenketten werden in der Betontechnologie als Dispergiermittel, insbesondere als Verflüssiger, eingesetzt. Bei Zusatz solcher Polymere zu Zementen kann der Wasseranteil herabgesetzt werden, was für die Verarbeitbarkeit und die Stabilität des Betons von Vorteil ist. Die Polymere werden als Kammpolymere bezeichnet, weil sie ein einziges Basispolymer (auch als "Backbone", "Polymerbackbone", "Rückgrat" oder "Hauptkette" bezeichnet) aufweisen, an das eine Vielzahl von Seitenketten kovalent gebunden ist, so dass die Molekülstruktur insgesamt einem Kamm ähnelt. Es gibt eine Vielzahl solcher Kammpolymere, die z.B. neben Estergruppen und freien Carboxygruppen unter anderem auch Amidgruppen aufweisen können.

Im Stand der Technik werden zur Herstellung von Kammpolymeren im Wesentlichen zwei Verfahren eingesetzt. In einem verbreiteten Verfahren werden solche Kammpolymere aus ungesättigten Carbonsäure-, Ester-, Ether-, Amid-und/oder Imid-funktionenellen Monomeren durch radikalische Polymerisation hergestellt. In einem weiteren bekannten Verfahren werden die Polymere in einer so genannten "polymeranalogen Umsetzung" aus einer Polycarbonsäure, die Acrylsäureeinheiten und/oder Methacrylsäureeinheiten aufweist, mit den jeweiligen Alkoholen und/oder Aminen hergestellt. Dabei wird das Kammpolymer durch Veresterung und/oder Amidierung der Polycarbonsäure oder einem Salz oder Anhydrid davon erhalten.

Kammpolymere, die als Verflüssiger für Zementzusammensetzungen eingesetzt werden, enthalten als Hauptseitenketten im Allgemeinen Polyether, die über Estergruppen mit der Polycarbonsäure verbunden sind. Die Herstellung der Kammpolymere durch polymeranaloge Umsetzung umfasst daher als wesentlichen Reaktionsschritt eine Veresterung. Da Veresterungsreaktionen in der organischen Synthese üblicherweise mittels Säurekatalyse durchgeführt werden, erfolgt auch die Herstellung von Kammpolymeren aus Monohydroxypolyethern, die eine endständige Hydroxygruppe aufweisen, und Polycarbonsäuren im Stand der Technik im Allgemeinen säurekatalysiert.

So offenbart EP 2065403 A1 die säurekatalysierte Veresterung von Polycarbonsäuren mit Monohydroxypolyethern in Gegenwart von starken Mineralsäuren, bevorzugt Schwefelsäure.

Die EP 1138697 A1 offenbart ebenfalls die Veresterung von Polysäuren mit Monohydroxypolyethern in Gegenwart von Säurekatalysatoren. Als bevorzugte Katalysatoren werden Schwefelsäure oder p-Toluolsulfonsäure eingesetzt. Zum Neutralisieren der Polysäure können gegebenenfalls alkalische Substanzen zugesetzt werden, wie Metallhydroxide.

In der WO 99/47468 wird vorgeschlagen, bei der Veresterung der Polycarbonsäuren dem Reaktionsgemisch eine Base zuzugeben, wie Natriumhydroxid und Lithiumhydroxid. Es wird offenbart, dass so hergestellte Kammpolymere vorteilhafte Eigenschaften bei der Verflüssigung von Zementzusammensetzungen aufweisen. Allerdings sind in solchen Reaktionsgemischen die Komponenten nicht oder nur schwer homogen mischbar. Die Komponenten bilden Phasen aus oder fallen aus, wodurch die Ausbeute bei der Synthese beeinträchtigt wird oder die Reaktion im Extremfall nicht durchführbar ist.

Angesichts der weltweiten Bautätigkeit besteht ein hoher Bedarf an solchen Betonverflüssigern. Die beschriebenen Kammpolymere sind jedoch vergleichsweise kompliziert aufgebaut und die Synthese ist entsprechend aufwändig. Um die Kosten bei der Betonverarbeitung niedrig zu halten, besteht somit ein Bedarf an neuen effizienten Verfahren zur Herstellung solcher Kammpolymere. Gerade bei der Produktion im industriellen Maßstab ist es wünschenswert, bekannte Verfahren hinsichtlich Reaktionszeit, Energieeffizienz und Ausbeute zu verbessern.

Zudem ist es immer noch eine Herausforderung, Verflüssiger für die unterschiedlichen Verarbeitungsbedingungen bereitzustellen, die weltweit zur Herstellung von Beton eingesetzt werden. Das ist den verschiedenen Arten von lokalen Klimas, Zementen, Aggregaten, Zementersatzfüllstoffen usw. zuzuschreiben, sowie den unterschiedlichen Produkten, wie Fertig-, Transport-, Spritzbeton, selbstverdichtender Beton oder vor Ort gemischter Beton. Spezielle Zusätze müssen daher bereitgestellt werden, die unter völlig unterschiedlichen Bedingungen wirksam sind. Es besteht daher ein Bedürfnis nach neuen Zusatzmitteln, die als Dispergiermittel, insbesondere als Verflüssiger für hydraulisch abbindende Systeme, und insbesondere für neue Einsatzgebiete, verwendet werden können.

Nach der Veresterungsreaktion wird ein Reaktionsprodukt in Form einer Schmelze des Kammpolymers erhalten, das zusätzlich Nebenprodukte, nicht umgesetzte Ausgangsstoffe und Salze enthält. Diese weiteren Komponenten können die Stabilität des Kammpolymers und die Wirkung als Verflüssiger beeinträchtigen. Im Stand der Technik erfolgt gegebenenfalls eine Nachbehandlung, beispielsweise durch Neutralisation oder Verdünnung. Üblicherweise erfolgt jedoch keine Aufreinigung des Kammpolymers, da solche Aufbereitungsverfahren in der industriellen Fertigung zu aufwändig und nicht kostenökonomisch wären. So erfolgt üblicherweise keine Abtrennung von Nebenprodukten oder von Salzen, beispielsweise durch Dialyse oder Säulenchromatographie.

Grundsätzlich wäre es daher wünschenswert, die Kammpolymere in hoher Reinheit, in hohen Ausbeuten und mit geringen Anteilen von unerwünschten Nebenprodukten zu erhalten.

Bei bekannten Kammpolymer-haltigen Zusammensetzungen ist nachteilig, dass die Produkte zur Hydrolyse neigen. Dadurch kann sich bei der Lagerung oder Verwendung der Anteil des Kammpolymers verändern und die Wirkung als Verflüssiger nachlassen.

Nachteilig ist auch ein hoher Salzgehalt (Salzfracht) des Reaktionsprodukts. Dieser kann zu Ausfällungen bei der Lagerung, insbesondere bei tiefen Temperaturen, führen. Die Salzfracht des Reaktionsprodukts resultiert unter anderem aus den anorganischen sauren oder basischen Katalysatoren und Zusätzen und gegebenenfalls aus der eingesetzten Polycarbonsäure, sofern diese als Salz eingesetzt wird.

### Aufgabe der Erfindung

Der Erfindung liegt die Aufgabe zugrunde, die oben beschriebenen Probleme zu überwinden.

Es soll ein einfaches und effizientes Verfahren zur Herstellung von Kammpolymeren bereitgestellt werden. Das Verfahren soll verfahrensökonomisch, unter Einsatz geringer Mengen an Edukten und Hilfsstoffen und in wenigen Reaktionsschritten durchführbar sein und bei kurzer Reaktionszeit und geringem Energieverbrauch eine hohe Ausbeute erzielen.

Der Erfindung liegt auch die Aufgabe zugrunde, Kammpolymere und kammpolymerhaltige Zusammensetzungen mit vorteilhaften Eigenschaften bereitzustellen. Der Gehalt an Kammpolymer im Reaktionsprodukte soll daher hoch sein und der Gehalt an unerwünschten Nebenprodukten gering. Das Kammpolymer oder die das Kammpolymer enthaltende Lösung sollen nicht zur Hydrolyse neigen und eine gute Stabilität bei der Lagerung und Verarbeitung aufweisen. Insbesondere soll die Salzfracht niedrig sein.

Es sollen dadurch neue Verflüssiger zur Verwendung in abbindenden Zusammensetzungen bereitgestellt werden, die vorteilhafte Eigenschaften aufweisen. Die Polymere sollen in hydraulisch abbindenden Zusammensetzungen eine gute verflüssigende Wirkung zeigen.

### Offenbarung der Erfindung

Überraschenderweise wird die der Erfindung zugrunde liegende Aufgabe gelöst durch Verfahren gemäß den Patentansprüchen.

Gegenstand der Erfindung ist ein Verfahren zur Herstellung von Kammpolymeren, wobei mindestens eine Polycarbonsäure oder ein Salz davon mit mindestens einem Monohydroxypolyether verestert wird, umfassend die Schritte:
(a) Bereitstellen eines Reaktionsgemischs, dass mindestens eine Polycarbonsäure enthält,
(b) Erwärmen des Reaktionsgemischs auf mindestens 80°C, insbesondere mehr als 100°C,
(c) Zugeben einer Base und
(d) Verestern bei einer Reaktionstemperatur von mindestens 80°C, insbesondere mehr als 100°C, unter Erhalt des Kammpolymers,
wobei dem Reaktionsgemisch in Schritt (a) und/oder (b) mindestens ein Monohydroxypolyether zugegeben wird.

Die Schritte (a) - (d) werden insbesondere in der angegebenen Reihenfolge durchgeführt.

Bei dem erfindungsgemäßen Verfahren wird die Base in einer Menge zugesetzt, die eine teilweise Neutralisation der Polycarbonsäure bewirkt. Überraschenderweise wurde gefunden, dass die Reaktion bei Erwärmen des Reaktionsgemischs auf über 80°C, bevorzugt über 100°C oder über 120°C, und anschließender Zugabe einer Base zur Teilneutralisation der Polycarbonsäure besonders effizient ist.

In Schritt (a) wird ein Reaktionsgemisch bereitgestellt. Das Reaktionsgemisch enthält die mindestens eine Polycarbonsäure, insbesondere als wässrige Lösung, und gegebenenfalls mindestens einen Monohydroxypolyether. Dabei kann zunächst nur ein Teil des Monohydroxypolyethers zugesetzt werden, oder auch die gesamte Menge. Gegebenenfalls sind auch zusätzliche Säuren und/oder Monoaminverbindungen enthalten. Der Monohydroxypolyether, oder ein Teil der Gesamtmenge des Monohydroxypolyethers, die zusätzliche Säure und/oder die Monoaminverbindungen können jedoch auch zu einem späteren Zeitpunkt während oder nach dem Erwärmen des Reaktionsgemischs zugesetzt werden. Die zusätzliche Säure wird insbesondere bei höchstens 100°C zugegeben. Dies kann vorteilhaft sein, wenn die Mischung bei niedriger Temperatur noch relativ viskose und nur schwer homogenisierbar ist. Üblicherweise ist das Reaktionsgemisch wasserhaltig. Bevorzugt wird das Reaktionsgemisch in Schritt (a) und (b) homogen vermischt, beispielsweise durch Rühren. Dem Reaktionsgemisch in Schritt (a) und (b) wird die Base noch nicht zugesetzt. Die Temperatur des Reaktionsgemischs in Schritt (a) kann beispielsweise zwischen 25°C und 90°C liegen. Bevorzugt ist eine Temperatur oberhalb Raumtemperatur, da dann die Vermischung der Komponenten erleichtert ist, beispielsweise bei 40°C bis 80°C.

Bevorzugt liegt die Polycarbonsäure in dem Reaktionsgemisch in Schritt (a) und/oder (b) nicht oder im Wesentlichen nicht neutralisiert vor. Die protonierte bzw. nicht neutralisierte Form der Carboxygruppe weist die Formel -COOH auf, während die neutralisierte bzw. nicht protonierte Form die Formel -COO- aufweist. Es wurde gefunden, dass eine vollständig oder weitgehend protonierte Polycarbonsäure sich besonders effektiv und homogen vermischen lässt. Im Rahmen der Erfindung bedeutet "im Wesentlichen" oder "weitgehend" im Bezug auf Begriffe wie "protoniert" bzw. "neutralisiert", dass die Polycarbonsäure zu mehr als 90%, insbesondere mehr als 92%, insbesondere mehr als 95% protoniert bzw. neutralisiert vorliegt.

Dagegen wurde bei neutralisierten und/oder teilneutralisierten Polycarbonsäuren beobachtet, dass sich Inhomogenitäten im Reaktionsgemisch bilden können und dass die Reaktion weniger effizient oder im Extremfall überhaupt nicht durchführbar ist.

In einer Ausführungsform der Erfindung kann daher dem Reaktionsgemisch in Schritt (a) vor dem Erwärmen in Schritt (b) eine zusätzliche Säure, insbesondere Schwefelsäure oder p-Toluolsulfonsäure, zugegeben werden. Dabei wird die zusätzliche Säure in einer Menge zugegeben, dass die Polycarbonsäure vollständig oder im Wesentlichen protoniert wird und nicht mehr, oder im Wesentlichen nicht mehr, neutralisiert vorliegt.

Die zusätzliche Säure ist bevorzugt eine starke Säure, beispielsweise eine Mineralsäure. Bevorzugt ist der pKₛ-Wert der zusätzlichen Säure kleiner 3, insbesondere kleiner 1. Bevorzugte zusätzliche Säuren sind Schwefelsäure und p-Toluolsulfonsäure.

Die Zugabe einer zusätzlichen Säure kann vorteilhaft sein, um das Reaktionsgemisch zu lösen und zu homogenisieren. Dies ist insbesondere vorteilhaft, wenn die eingesetzte Polycarbonsäure vollständig oder teilweise neutralisiert vorliegt. Die zusätzliche Säure dient dazu, die Polycarbonsäure im Reaktionsgemisch zu protonieren. Dadurch wird die Mischbarkeit mit den weiteren Komponenten verbessert, insbesondere wenn das Reaktionsgemisch erwärmt wird und dabei der Wasseranteil verringert wird. Die Säure wirkt so als Lösungsvermittler zwischen dem Monohydroxypolyether und der Polycarbonsäure. Die Zugabe von zusätzlicher Säure ist insbesondere bevorzugt, wenn sich Inhomogenitäten des Reaktionsgemischs zeigen. Wenn keine vollständige Vermischung des Monohydroxypolyethers mit der Polycarbonsäure erreicht wird, so kann sich dies negativ auf die Reaktionsgeschwindigkeit und Reaktionsführung auswirken. Die Menge der eingesetzten zusätzlichen Säure beträgt beispielsweise 1 bis 400 mMol, insbesondere zwischen 2 und 100 mMol, bezogen auf 1 Mol Carboxygruppen des Basispolymers. Dabei ist die Äquivalentkonzentration der Säure bevorzugt niedriger als die der Base. Sie beträgt beispielsweise 0,05 bis 0,8 Äquivalente, insbesondere 0,1 bis 0,5 Äquivalente, bezogen auf die Base. Bevorzugt ist die Polycarbonsäure nach Zugabe der zusätzlichen Säure vollständig oder weitgehend protoniert.

Die Zugabe der zusätzlichen Säure in Schritt (a) ist nicht erforderlich, wenn das Reaktionsgemisch auch ohne diese Säure beim Vermischen und Erwärmen homogen mischbar ist. Dies ist insbesondere der Fall, wenn die eingesetzte Polycarbonsäure wenig oder nicht neutralisiert vorliegt. Bei dieser bevorzugten Ausführungsform wird keine zusätzliche Säure, insbesondere keine Mineralsäure, zugegeben.

Beispielsweise ist die Polycarbonsäure im Reaktionsgemisch in Schritt (a) zu mehr als 95%, insbesondere mehr als 98%, mehr als 99% oder mehr als 99,5% protoniert. Der Neutralisationsgrad und Protonierungsgrad der Polycarbonsäure kann nach bekannten Methoden bestimmt werden, beispielsweise durch Titration.

Die Polycarbonsäure oder das Salz davon bildet das Basispolymer ("Polymerbackbone", "Rückgrat") des Kammpolymers. In einer bevorzugten

Ausführungsform der Erfindung ist die Polycarbonsäure eine Polyacrylsäure, Polymethacrylsäure oder ein Copolymer aus Acrylsäure und Methacrylsäure. Die Polycarbonsäure kann als freie Säure oder als Salz vorliegen, wobei auch nur ein Teil der Säuregruppen als Salz vorliegen kann. Die Polycarbonsäure ist dann vollständig oder teilweise neutralisiert. Der Begriff "Salz" umfasst erfindungsgemäß neben den klassischen Salzen, die durch Neutralisation mit einer Base erhalten werden, auch komplexe Verbindungen mit Metallionen und den Carboxylat-Gruppen als Liganden. Bei der Herstellung solcher Polycarbonsäuren erfolgt die Einstellung der Kettenlänge mit einem Regler, beispielsweise Phosphit oder Sulfit. Daher können die Polycarbonsäuren Gruppen aufweisen, die keine Carbonsäureeinheiten sind, beispielsweise Phosphor- oder Schwefel-haltige Gruppen. Geeignete Polycarbonsäuren sind kommerziell erhältlich und werden beispielsweise von der Firma BASF unter der Handelsbezeichnung "Sokalan" angeboten.

Der Monohydroxypolyether weist eine Hydroxygruppe pro Molekül auf, die bevorzugt endständig ist. Die Polyether sind daher Monohydroxy-terminierte Polyether. Solche Monohydroxypolyether sind im Allgemeinen mit unter üblichen Reaktionsbedingungen nicht reaktiven Endgruppen, bevorzugt mit Alkylgruppen, einseitig verschlossen. Die Monohydroxypolyether sind bevorzugt Monohydroxyalkoxylate. Bevorzugt handelt es sich um ein Polymer mit einem Polyalkylenglykol-Grundgerüst. Vorzugsweise ist der Monohydroxypolyether eine Monohydroxyverbindung **E** der Formel (I)

HO-(R³O)ₓ-R⁴ (I),

wobei R³ unabhängig voneinander eine C₂ - C₄Alkylengruppe bedeutet, mit einer Reihenfolge der (R³O)-Einheiten in irgendeiner möglichen Sequenz; wobei R⁴ für einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und wobei x für eine Zahl von 3 bis 250, vorzugsweise 5 bis 200 steht und üblicherweise die mittlere Kettenlänge bezeichnet.

Bevorzugt weisen Monohydroxyverbindungen **E** der Formel (I) als Substituenten R⁴ eine Alkylgruppe auf. Diese ist bevorzugt eine Methyl-, Ethyl-, i-Propyl- oder n-Butylgruppe, insbesondere eine Methylgruppe oder Ethylgruppe. Vorzugsweise steht R³ unabhängig voneinander für eine C₂-Alkylengruppe und/oder eine C₃-Alkylengruppe. Bevorzugt handelt es sich bei **E** um Mischpolymerisate aus Ethylenoxid/Propylenoxid, mehr bevorzugt um einseitig Endgruppen-verschlossenes Polyoxyethylen. Mischungen mehrerer unterschiedlicher Verbindungen der Gruppe **E** sind ebenfalls möglich. So können beispielsweise einseitig Endgruppen-verschlossene Polyoxyethylene mit unterschiedlichen Molekulargewichten gemischt werden, oder es können beispielsweise Mischungen von einseitig Endgruppen-verschlossenen Polyoxyethylenen mit einseitig Endgruppen-verschlossenen Mischpolymeren aus Ethylenoxid und Propylenoxid oder einseitig Endgruppen-verschlossenen Polyoxypropylenen verwendet werden.

In einer bevorzugten Ausführungsform ist die Monohydroxyverbindung **E** ein einseitig Endgruppen-verschlossenes Polyoxyalkylen mit einem Molekulargewicht M_{w} von 500 bis 10'000 g/mol, insbesondere von 800 bis 8000 g/mol, bevorzugt von 1000 bis 7000 g/mol. Geeignet ist auch eine Mischung von einseitig Endgruppen-verschlossenen Polyoxyalkylenen mit unterschiedlichem Molekulargewicht, beispielsweise die Mischung von Polyoxyalkylen mit einem Molekulargewicht von 1'000 g/mol mit Polyoxyalkylen mit einem Molekulargewicht von 5'000 g/mol.

Die Menge des eingesetzten Monohydroxypolyethers wird so eingestellt, dass der gewünschte Veresterungsgrad des Basispolymers erreicht wird. In einer bevorzugten Ausführungsform der Erfindung ist der Veresterungsgrad der Polycarbonsäure, also das Verhältnis der Anzahl der Estergruppen zu der Anzahl aller Carboxygruppen des Basispolymers im nicht veresterten Zustand, zwischen 5 und 80%, bevorzugt zwischen 9 und 67%, besonders bevorzugt zwischen 13 und 50%.

In einer bevorzugten Ausführungsform der Erfindung wird die Polycarbonsäure zusätzlich mit mindestens einem Amin amidiert. Bevorzugt erfolgt die Amidierung mit der Veresterung. Zusätzlich zur Monohydroxyverbindung E kann bei der Veresterung eine Monoaminverbindung **F** hinzugefügt werden. Dadurch erfolgt neben der Veresterung auch die Bildung von Amidgruppen. Typische Beispiele solcher Monoaminverbindungen **F** lassen sich durch die Formel (II) darstellen:

NH₂-(R³O)ₓ-R⁴ (II).

Die Substituenten R³ und R⁴ beziehungsweise der Index x weisen unabhängig voneinander dieselben Bedeutungen auf wie bereits oben für die Formel (I) definiert.

Beispiele für solche Monoaminverbindungen **F** sind α-Methoxy-ω-Amino-Polyoxyethylen, α-Methoxy-ω-Amino-Polyoxypropylen und α-Methoxy-ω-Amino-Oxyethylen-Oxypropylen-Copolymer. Besonderes bevorzugt als Monoaminverbindungen **F** sind α-Methoxy-ω-Amino-Oxyethylen-Oxypropylen-Copolymere oder α-Methoxy-ω-Amino-Polyoxyethylene, sowie andere Monoamine, welche beispielsweise von der Firma Huntsman unter dem Namen Jeffamine® der M-Serie vertrieben werden, sowie Mischungen davon. Meist bevorzugt sind α-Methoxy-ω-Amino-Oxyethylen-Oxypropylen-Copolymere. Solche Monoaminverbindungen **F** sind beispielsweise erhältlich aus einer mit Alkohol gestarteten Polymerisation von Ethylen- und/oder Propylenoxid gefolgt von Umwandlung der terminalen Alkoholgruppe in eine Amingruppe.

Die Menge der eingesetzten Monoaminverbindung wird so eingestellt, dass der gewünschte Amidierungsgrad des Basispolymers erreicht wird. Bevorzugt weist das Kammpolymer einen Anteil an Amidgruppen von 0,01 bis 2% auf, bevorzugt zwischen 0,02 und 0,2%, bezogen auf die Gesamtzahl der Carboxygruppen des Basispolymers vor der Reaktion. Bevorzugt ist der Anteil der Amidgruppen etwa 0,04%.

Vorzugsweise erfolgt die Veresterung, gegebenenfalls in Verbindung mit einer Amidierung, durch die Reaktion von
a) mindestens einer Polycarbonsäure oder einem Salz dieser Polycarbonsäure;
b) mindestens einer Monohydroxyverbindung **E** der Formel (I)

   HO-(R³O)ₓ-R⁴ (I)

   und gegebenenfalls mindestens einer zusätzlichen Monoaminverbindung **F** der Formel (II)

   NH₂-(R³O)ₓ-R⁴ (II).

   wobei x, R³ und R⁴ unabhängig voneinander ausgewählt sind wie oben angegeben.

Bei der Veresterung kann eine weitere Verbindung **D** zugegeben werden, welche mit der Polycarbonsäure oder dem Salz davon eine Reaktion eingehen kann. Beispiele für eine Verbindung **D** sind weitere Amine oder Alkohole, beispielsweise ein C₆-C₂₀ Alkylalkohol oder ein weiteres Mono- oder Diamin, vorzugsweise Monoamin. Es können auch mehrere verschiedene Verbindungen **D** eingesetzt werden.

Vor Zugabe der Base wird das Reaktionsgemisch in Schritt (b) auf eine Temperatur oberhalb von 80°C, erwärmt. Die in Schritt (b) eingestellte Temperatur entspricht bevorzugt der Reaktionstemperatur der Veresterung in Schritt (d). Bevorzugt beträgt die Temperatur in Schritt (b) und/oder die Reaktionstemperatur in Schritt (d) mindestens 100°C oder mindestens 120°C, besonders bevorzugt mindestens 140°C oder mindestens 160°C. In bevorzugten Ausführungsformen liegt die Temperatur in Schritt (b) und/oder die Reaktionstemperatur in Schritt (d) zwischen 80°C und 250°C, bevorzugt zwischen 120°C und 220°C oder zwischen 140°C und 200°C. Eine bevorzugte Temperatur ist beispielsweise 175°C. Temperaturen oberhalb 100°C sind insbesondere bei Schritt (b) bevorzugt, da dabei effizient Wasser entfernt werden kann.

Nach dem Erwärmen in Schritt (b), und insbesondere vor Durchführung der eigentlichen Veresterung, wird dem Reaktionsgemisch in Schritt (c) des Verfahrens eine Base zugegeben. Die Base wird dem Reaktionsgemisch zugefügt, nachdem die Polycarbonsäure mit dem Monohydroxypolyether vermischt wurde. Dabei ist die Base ein zusätzlicher Bestandteil des Reaktionsgemischs. Die als Edukt eingesetzte Polycarbonsäure oder andere Edukte, beispielsweise das zur Amidierung eingesetzte Amin, sind keine zusätzlichen Basen im Sinne der Erfindung.

Die Base ist bevorzugt eine niedermolekulare Verbindung. Dies bedeutet, dass die Base bevorzugt kein Polymer ist, also keine durch eine Polymerisationsreaktion hergestellte Verbindung. Das Molekulargewicht liegt beispielsweise unterhalb 2000 g/mol oder unterhalb 1000 g/mol.

Die Base ist bevorzugt ausgewählt aus Metallcarboxylaten, Metallhydroxiden, Metallcarbonaten, Thiocyanaten und Phosphiten. In einer bevorzugten Ausführungsform der Erfindung ist das Metall der Base ein Alkalimetall oder Erdalkalimetall, insbesondere Natrium oder Kalium. In einer bevorzugten Ausführungsform der Erfindung ist das Carboxylat ein Carbonat, Formiat, Acetat, Propionat, Citrat, Adipat, Maleat oder Tartrat. Bevorzugt ist das Carboxylat ein Natrium- oder Kaliumcarboxylat, insbesondere ein Acetat oder Formiat. Bevorzugt ist der Einsatz von Kaliumsalzen.

Die Base wird eingesetzt, um die Polycarbonsäure im Reaktionsgemisch zumindest teilweise zu neutralisieren. Bevorzugt liegt der Neutralisationsgrad der Polycarbonsäure im Reaktionsgemisch nach Zugabe der Base in Schritt (c) zwischen 2% und 50%, bevorzugt zwischen 4% und 30%, besonders bevorzugt zwischen 5% und 20% oder zwischen 5% und 15%.

Dem Fachmann ist bekannt, dass eine Veresterungsreaktion eine Gleichgewichtsreaktion ist, die von den Konzentrationen der Reaktanten und dem pH-Wert abhängt. Daher werden die Menge der eingesetzten Base, die Mengen der Edukte und der pH-Wert so aufeinander eingestellt, dass eine effiziente Reaktion erfolgt.

Der pH-Wert des Reaktionsgemischs bei der Reaktion in Schritt (d) liegt bevorzugt im leicht sauren Bereich, insbesondere zwischen 3 und 6 oder zwischen 3 und 5,5. Bevorzugt liegt der pH-Wert bei der oberhalb von 3, insbesondere oberhalb von 3,5.

Die Reaktion ist auch abhängig vom Wassergehalt des Reaktionsgemischs. Allgemein wird die Reaktion gefördert, wenn der Wassergehalt niedrig ist. Falls der Wassergehalt im Reaktionsgemisch zu hoch ist, beispielsweise weil die Ausgangsstoffe in Form von wässrigen Lösungen oder Dispersionen bereitgestellt werden, sollte vor Durchführung der Reaktion ein Teil des Wassers entfernt werden. Bevorzugt wird der Wassergehalt durch das Erwärmen in Schritt (b) reduziert, wobei das destillierte Wasser entfernt wird. Gegebenenfalls kann vor Zugeben der Base in Schritt (c) das Reaktionsgemisch noch bei erhöhter Temperatur belassen werden, bis der gewünschte Wassergehalt erreicht ist.

Die Menge der in Schritt (c) eingesetzten Base wird unter Berücksichtigung des Neutralisationsgrads der Polycarbonsäure eingestellt. Polycarbonsäuren sind kommerziell oft in teilweise oder vollständig neutralisierter Form erhältlich. Wie oben erläutert sollte die Polycarbonsäure vor dem Erwärmen in Schritt (b) stark oder weitgehend protoniert vorliegend, was gegebenenfalls durch Säurezugabe erreicht wird.

In einer bevorzugten Ausführungsform wird die Base in einer Menge von 10 bis 500 mMol, bevorzugt von 20 bis 150 mMol, insbesondere zwischen 25 und 100 mMol, bezogen auf 1 Mol Carboxygruppen der eingesetzten Polycarbonsäure, hinzugefügt.

In einer bevorzugten Ausführungsform der Erfindung ist die Base ein Metallcarboxylat, wobei das Carboxylat während oder nach der Veresterung in Form der Carbonsäure durch Destillation entfernt wird. Die Entfernung der Basenanionen durch Destillation ist beispielsweise bei Einsatz von Formiaten, Acetaten oder Carbonaten möglich, wobei die entsprechende Säure abdestilliert wird. Die verminderte Salzfracht der Reaktionsprodukte führt dazu, dass die kammpolymerhaltigen Reaktionsprodukte eine erhöhte Stabilität bei der Lagerung aufweisen. Insbesondere zeigt sich eine Verbesserung bei der Lagerung bei niedrigen Temperaturen, beispielsweise zwischen 0 und 15°C. Es wurde gefunden, dass solche Kammpolymere weniger zur Ausfällung von Salzen neigen als nach dem Stand der Technik hergestellte Kammpolymerlösungen.

Erfindungsgemäß kann ein Phosphit als Base eingesetzt werden. Das Phosphit kann vor der Reaktion dem Gemisch aus Polycarbonsäure und Polyether zugesetzt werden. Polycarbonsäuren werden im Stand der Technik üblicherweise mit Molekulargewichtsregler hergestellt, um die Kettenlänge einzustellen. Als Regler werden unter anderem Phosphite eingesetzt. Ein solches phosphithaltiges Reaktionsprodukt kann anschließend erfindungsgemäß verestert werden. Erfindungsgemäß ist es besonders bevorzugt, als Base mindestens ein Salz einer organischen Säure, einzusetzen. Solche Basen sind im Allgemeinen schwache Basen mit relativ niedrigen pK_{B}-Werten. Bei dieser Ausführungsform ist der Einsatz von Metallhydroxiden, insbesondere von Alkali- oder Erdalkalimetallhydroxiden, nicht erforderlich. In einer Ausführungsform wird dem Reaktionsgemisch kein Metallhydroxid, insbesondere kein Alkali- oder Erdalkalimetallhydroxid, zugesetzt. Auch die Zugabe von basischen Aminen, beispielsweise als Katalysatoren, ist nicht erforderlich. Bevorzugt werden als Base keine Amine zugesetzt.

In einer bevorzugten Ausführungsform der Erfindung enthält das Reaktionsgemisch neben dem Basispolymer folgende Komponenten, bezogen auf 1 Mol Carboxygruppen des Basispolymers:
(A) 0,05 bis 0,8 Mol Monohydroxypolyether,
(B) gegebenenfalls 0 bis 0,5 Mol Amine,
(C) 10 bis 250 mMol zusätzliche Base, und
(D) gegebenenfalls 0 bis 100 mMol zusätzliche Säure.

In einer weiteren Ausführungsform der Erfindung enthält das Reaktionsgemisch
(E) bis zu 30 Gew.%, bevorzugt weniger als 20 Gew.%, Wasser, bezogen auf das Gesamtgewicht der Komponenten (A), (B) und des Basispolymers bzw. Polymerrückgrats.

Die Umsetzung der Polycarbonsäure oder des Salzes davon mit dem Monohydroxypolyether und gegebenenfalls mit mindestens einer zusätzlichen Monoaminverbindung **F** und gegebenenfalls einer weiteren Verbindung **D** zu einem Kammpolymer erfolgt bei der polymeranalogen Reaktion typischerweise derart, dass zur Polycarbonsäure oder dem Salz davon unter Rühren die mindestens eine Monohydroxyverbindung **E** und/oder die mindestens eine Monoaminverbindung **F** zugegeben wird und auf die Umsetzungstemperatur aufgeheizt wird. Anschließend wird die Base zugegeben. Die Mischung wird weitergerührt und eventuell unter Vakuum oder durch Über- oder Durchleiten eines Gasstromes über beziehungsweise durch die Reaktionsmasse, umgesetzt. Falls zusätzlich zur Monohydroxyverbindung **E** eine Monoaminverbindung **F** eingesetzt wird, kann deren Zugabe gleichzeitig mit der Monohydroxyverbindung **E** oder aber zu einem späteren Zeitpunkt während dieses Reaktionsschrittes erfolgen.

Das Reaktionsgemisch ist bei der Reaktionstemperatur eine viskose Masse, die man auch als Schmelze bezeichnen kann. Insgesamt ist die Base so auszuwählen, dass sie unter den gewünschten Reaktionsbedingungen ausreichend löslich ist. Es wurde gefunden, dass die erfindungsgemäß bevorzugten Basen, wie Carboxylate und Metallhydroxide, bei den Reaktionsbedingungen (erhöhte Temperatur, geringer Wassergehalt) aufgrund ihrer Löslichkeit in ausreichenden Mengen eingesetzt werden können.

Es können übliche Additive zugesetzt werden, welche für Veresterungen vorteilhaft sind. Bevorzugt ist beispielsweise die Zugabe eines Entschäumers.

Nach Durchführung der Veresterungsreaktion kann die Reaktion durch Abkühlen unterbunden werden. Grundsätzlich ist die erfindungsgemäße Reaktion jedoch so effizient, dass eine nahezu vollständige Umsetzung erreicht wird und eine Neutralisation nicht unbedingt erforderlich ist. Es genügt erfindungsgemäß, das Reaktionsgemisch abzukühlen. Ungeachtet dessen kann das Reaktionsgemisch aufbereitet werden.

Die Reaktion wird bevorzugt bei Unterdruck durchgeführt. Die erfindungsgemäße Reaktion wird mittels üblicher Vorrichtungen durchgeführt, insbesondere unter Rühren, mittels Temperaturkontrolle, unter Verwendung üblicher Heizvorrichtungen und/oder mit einer geeigneten Vakuumpumpe. Erfindungsgemäß wurde festgestellt, dass bei Zugabe von Basen hohe Ausbeuten der Kammpolymere erzielt werden können. Bevorzugt liegt der Umsetzungsgrad, bezogen auf den eingesetzten Polyether, oberhalb von 70%, 80% oder 90%, bevorzugt oberhalb von 95%.

Da die Reaktion besonders schnell und effizient verläuft, kann eine vergleichsweise geringe Reaktionszeit eingestellt werden. Bevorzugt liegt die Reaktionszeit zwischen 30 Minuten und 6 Stunden, insbesondere zwischen 45 und 240 Minuten. Beispielsweise kann bei Verwendung von Kaliumacetat als Base eine nahezu vollständige Umsetzung des Monohydroxypolyethers bereits nach einer Stunde erreicht werden. Das erfindungsgemäße Verfahren ist daher aufgrund seiner hohen Effizienz gegenüber bekannten Verfahren energiesparend und kostengünstig. Bei der großtechnischen Herstellung von Kammpolymeren kann eine große Energiemenge eingespart werden, da die Reaktionszeit bei hoher Temperatur (deutlich über 100°C) verringert wird. Auch kann die Reaktionstemperatur gegenüber bekannten Verfahren deutlich gesenkt werden.

Erfindungsgemäß wird eine kammpolymerhaltige Schmelze erhalten. Diese enthält das Kammpolymer in hoher Reinheit und Konzentration. Bei Abkühlung der Schmelze kann das Kammpolymer in fester Form erhalten werden, insbesondere in Form von Flocken. Durch Vermischung mit Wasser kann auch eine Lösung erhalten werden. Das Reaktionsprodukt kann gegebenenfalls nachbehandelt werden, beispielsweise neutralisiert oder mit Zusatzstoffen und/oder Zusatzmitteln versehen werden, und als Additiv für hydraulisch abbindende Zusammensetzungen eingesetzt werden.

Gegenstand der Erfindung ist auch eine kammpolymerhaltige Zusammensetzung, die nach dem erfindungsgemäßen Verfahren erhältlich ist. Die Zusammensetzung ist das Reaktionsprodukt und daher eine wässrige Lösung oder Dispersion des Kammpolymers. Sie kann zudem weitere Komponenten, wie nicht reagierte Ausgangsstoffe, Nebenprodukte, Salze und gegebenenfalls Zusatzstoffe enthalten.

In einer bevorzugten Ausführungsform der Erfindung umfasst das Kammpolymer:
a) mindestens eine Acrylsäureeinheit **A** oder ein Salz davon und/oder mindestens eine Methacrylsäureeinheit **M** oder ein Salz davon; und
b) mindestens einer Struktureinheit **B** der Formel (I); 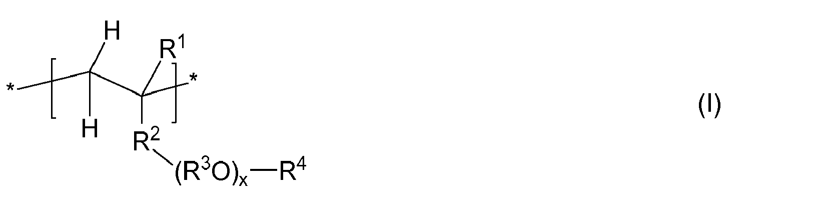 wobei
   R¹ unabhängig voneinander für H oder CH₃ steht;
   R² unabhängig voneinander für ein Estergruppe -CO-O- oder für eine
   Amidgruppe -CO-NH- steht,
   R³ unabhängig voneinander für eine C₂ - C₆ Alkylengruppe, insbesondere
   für eine Ethylen- oder Propylengruppe steht,
   R⁴ unabhängig voneinander für H, einen C₁ - C₁₂ Alkyl- oder Cycloalkylrest,
   einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht, und
   x unabhängig voneinander ein Wert zwischen 3 und 250, vorzugsweise zwischen 5 und 200 ist.

Die Hauptkette oder das Basispolymer des Kammpolymers ist dabei ein lineares Polymer oder Copolymer, das aus der mindestens einen Acrylsäureeinheit **A** oder dem Salz davon und/oder der mindestens einen Methacrylsäureeinheit **M** oder dem Salz davon durch Polymerisation erhalten wurde. Die Struktureinheit **B** ist Bestandteil des Kammpolymers.

Die mindestens eine Acrylsäureeinheit **A** und die mindestens eine Methacrylsäureeinheit **M** können teilweise oder vollständig neutralisiert sein. Die Säureeinheit kann als freie Säure oder auch als Salz oder Teilsalz oder Anhydrid vorliegen, wobei der Begriff "Salz" hier und im Folgenden neben den klassischen Salzen, wie sie durch Neutralisation mit einer Base erhalten werden, auch komplexchemische Verbindungen zwischen Metallionen und den Carboxylat- oder Carboxygruppen als Liganden umfasst. Die klassischen Salze werden insbesondere durch Neutralisation mit Natriumhydroxid, Calciumhydroxid, Magnesiumhydroxid, Ammoniumhydroxid oder einem Amin erhalten.

Die Struktureinheit **B** der Formel (I) kann je nach Auswahl des Restes R² ein Ester oder ein Amid sein. In dem Kammpolymer sind Estergruppen und gegebenenfalls zusätzliche Amidgruppen enthalten. Der Anteil der über Estergruppen verbundenen Struktureinheiten **B** ist dabei vorzugsweise mindestens 50%, insbesondere mindestens 80% oder mindestens 90%, oder 100%.

Das Basispolymer des Kammpolymers kann je nach Auswahl von a) und b) eine Polyacrylsäure oder eine Polymethacrylsäure oder ein Copolymer aus Acrylsäure und Methacrylsäure sein.

In einer bevorzugten Ausführungsform steht -(R³O)ₓ- für eine C₂ bis C₄ Polyoxyalkylengruppe, insbesondere für eine Polyoxyethylengruppe oder eine Polyoxypropylengruppe oder Mischungen von Oxyethylen- und Oxypropyleneinheiten in beliebiger Sequenz, beispielsweise zufällig, alternierend oder blockweise. R⁴ ist vorzugsweise nicht H und besonders bevorzugt ein Methylrest.

In einer bevorzugten Ausführungsform der Erfindung weist das Kammpolymer an der Gesamtzahl aller (R³O)ₓ-Einheiten einen Anteil von Ethylenoxideinheiten von mindestens 30 Mol-%, vorzugsweise 50 bis 100 Mol-%, insbesondere 80 bis 100 Mol.-% auf. Besonders bevorzugt sind in dem Kammpolymer ausschließlich Ethylenoxideinheiten vorhanden.

In einer bevorzugten Ausführungsform der Erfindung weist das Kammpolymer mindestens eine weitere Struktureinheit **C** auf, die von den Struktureinheiten **A, B** und **M** verschieden ist, und die ausgewählt ist aus einer Ether-, Ester, Amid- oder Imideinheit, einer Säureeinheit, ausgewählt aus Carbonsäure, Sulfonsäure, Phosphonsäure, Phosphorsäureester, Carbonylamidomethylpropansulfonsäure und deren Salzen, oder einer Polyoxyalkylenoxycarbonyl-, Polyoxyalkylenaminocarbonyl-, Polyoxyalkylenoxyalkyl-, Polyoxyalkylenoxy-, Hydroxyethyloxycarbonyl-, Acetoxy-, Phenyl- oder *N*-Pyrrolidonylgruppe. Vorzugsweise umfasst die weitere Struktureinheit **C** Polyoxyalkylengruppen, vorzugsweise Polyoxyethylengruppen, Polyoxypropylengruppen oder Mischungen davon. Beispielsweise kann die Struktureinheit **C** eine Estereinheit sein, welche durch Umsetzung einer Mono- oder Dicarbonsäure mit einem Alkylalkohol, insbesondere einem C₆-C₂₀ Alkylalkohol hergestellt wird.

Das Kammpolymer kann eine Kombination von verschiedenen Struktureinheiten der jeweiligen Struktureinheiten von **A, M, B** und gegebenenfalls **C** aufweisen. Beispielsweise können mehrere Säureeinheiten **A** und **M** gemischt im Kammpolymer vorkommen, welche gar nicht oder ganz neutralisiert sind. Alternativ können mehrere unterschiedliche Ester- und/oder Amideinheiten **B** gemischt im Kammpolymer vorkommen, so zum Beispiel mehrere Estereinheiten **B** mit verschiedenen Substituenten R³. Bevorzugt ist beispielsweise die gemeinsame Verwendung von Polyoxyalkylenen, insbesondere von Polyoxyethylen mit Polyoxypropylen, oder die gemeinsame Verwendung von Polyoxyalkylenen, insbesondere von Polyoxyethylen, mit unterschiedlichem Molekulargewicht.

In einer bevorzugten Ausführungsform der Erfindung umfasst das Kammpolymer
a) 5 bis 95 Mol-%, vorzugsweise 10 bis 80 Mol-%, besonders bevorzugt 50-70 Mol% Acrylsäureeinheiten **A** und/oder 5 bis 95 Mol-%, vorzugsweise 10 bis 80 Mol-%, besonders bevorzugt 50-70 Mol% Methacrylsäureeinheiten **M,**
b) 5 bis 50 Mol-%, vorzugsweise 10 bis 40 Mol-% der Struktureinheit **B,** und
c) 0 bis 30 Mol-%, vorzugsweise 0 bis 15, insbesondere 0 bis 5 Mol-% der Struktureinheit **C,**
jeweils bezogen auf die Gesamtzahl aller monomeren Einheiten in der Hauptkette des Kammpolymers.

Die Abfolge der einzelnen Struktureinheiten **A, M, B,** und **C** im Kammpolymer kann alternierend, statistisch oder blockweise sein.

Das Kammpolymer weist vorzugsweise ein mittleres Molekulargewicht Mₙ im Bereich von 6.000 bis 150.000 g/mol, vorzugsweise 10.000 bis 100.000 g/mol, besonders bevorzugt 15.000 bis 80.000 g/mol auf.

Ein weiterer Gegenstand der Erfindung ist eine hydraulisch abbindende Zementzusammensetzung, enthaltend mindestens eine kammpolymerhaltige Zusammensetzung gemäß der Erfindung und mindestens ein hydraulisch abbindendes Bindemittel.

Gegenstand der Erfindung ist auch ein Formkörper, erhältlich durch Abbinden und Aushärten einer erfindungsgemäßen abbindenden Zementzusammensetzung. Erfindungsgemäß werden mit dem Begriff "Formkörper" dreidimensionale ausgehärtete Körper bezeichnet, die eine Form erhalten haben, wie Bauteile, Böden, Beschichtungen etc.

Gegenstand der Erfindung ist auch die Verwendung einer kammpolymerhaltigen Zusammensetzung gemäß der Erfindung zur Verflüssigung von hydraulisch abbindenden Zusammensetzungen, insbesondere Zementzusammensetzungen. Bevorzugt ist dabei die Verwendung des unmittelbaren Reaktionsproduktes der Veresterungsreaktion, das nicht weiter aufgereinigt wurde. Wegen der hohen Konzentration und Stabilität der Kammpolymere in diesen wässrigen Zusammensetzungen ist eine Aufreinigung nicht erforderlich. Es können jedoch bei der Verwendung weitere Komponenten zugefügt werden oder die Zusammensetzung kann gereinigt werden.

Unter dem Begriff "hydraulisch abbindende Zusammensetzung" werden Zusammensetzungen verstanden, die hydraulisch abbindende Bindemittel enthalten. Solche Bindemittel härten in Gegenwart von Wasser aus. Geeignete Zusammensetzungen und Bindemittel sind dem Fachmann im Bereich der Bauchemie bekannt. In einer bevorzugten Ausführungsform der Erfindung ist das hydraulische Bindemittel ausgewählt aus der Gruppe bestehend aus Zement, Gips, beispielsweise in Form von Anhydrid oder Halbhydrat, gebranntem Kalk und Mischungen von Zement mit Flugasche, Silica fume, Schlacke, Hüttensand oder Kalksteinfüller.

Als hydraulisch abbindende Zusammensetzung werden Zement oder Gips besonders bevorzugt. Übliche Zemente sind beispielsweise Portlandzemente oder Tonerdeschmelzzemente und deren jeweilige Mischungen mit üblichen Zusätzen.

Gegebenenfalls sind als Bestandteil (c) Zusatzmittel und/oder Zusatzstoffe enthalten. Die hydraulisch abbindenden Zusammensetzungen können übliche Zusatzstoffe, wie Flugaschen, Silica fume, Schlacke, Hüttensanden und Kalksteinfiller, enthalten. Weiterhin sind Zuschlagstoffe wie Sand, Kies, Steine, Quarzmehl, Kreiden sowie als Zusatzmittel übliche Bestandteile, wie andere Betonverflüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

Die kammpolymerhaltige Zusammensetzung kann als Dispergiermittel oder als Bestandteil eines Dispergiermittels eingesetzt werden. Das Dispergiermittel kann weitere Bestandteile enthalten, wie Additive, wie andere Verflüssiger, beispielsweise Lignosulfonate, sulfonierte Naphthalin-Formaldehyd-Kondensate, sulfonierte Melamin-Formaldehyd-Kondensate oder weitere Polycarboxylatether (PCE), Beschleuniger, Verzögerer, Schwindreduzierer, Entschäumer, Luftporenbildner oder Schaumbildner. Typischerweise beträgt dabei der Anteil des Kammpolymers 5 bis 100 Gew.-%, insbesondere 10 bis 100 Gew.-%, bezogen auf das Gesamtgewicht des Dispergiermittels.

Je nach Reaktionsführung kann das Dispergiermittel zusätzlich zum Kammpolymer freie Verbindungen der Ausgangsstoffe, insbesondere freie Monohydroxyverbindungen wie beispielsweise einseitig Endgruppen-verschlossenes Polyoxyalkylen, insbesondere freies Methoxy-Polyoxyethylen, enthalten.

Das Dispergiermittel kann insbesondere verwendet werden als Verflüssiger, als Wasserreduzierer, zur Verbesserung der Verarbeitbarkeit und/oder zur Verbesserung der Fliessfähigkeit der damit hergestellten hydraulisch abbindenden Zusammensetzungen. Insbesondere können mit dem Dispergiermittel hydraulisch abbindende Zusammensetzungen mit verlängerter Verarbeitbarkeit hergestellt werden.

Bei der erfindungsgemäßen Verwendung zeigen die hydraulisch abbindenden Zusammensetzungen eine verlängerte Verarbeitbarkeit. Das bedeutet, dass die Zusammensetzung nach Zugabe von Wasser und Dispergiermittel, enthaltend das Kammpolymer, noch über vergleichsweise längere Zeit verarbeitbar bleibt, im Vergleich zu Zusammensetzungen, die das Kammpolymer nicht enthalten, oder im Vergleich zu Zusammensetzungen, die andere wasserreduzierende Zusatzmittel wie herkömmliche Verflüssiger enthalten. Der Vergleich erfolgt beispielsweise so, dass die Zusammensetzungen ohne Kammpolymer oder mit bekanntem Verflüssiger anfänglich den gleichen Wasser/Zement Wert (w/z-Wert) bei vergleichbarem Anfangsausbreitmaß, welches über die Dosierungsmenge des Vergleichsverflüssigers eingestellt wird, aufweist.

Das Kammpolymer wird vorzugsweise in einer Menge von 0.01 bis 5 Gew.%, insbesondere 0,05 bis 2 Gew.% oder 0,1 bis 1 Gew.%, bezogen auf das Gewicht des Bindemittels, eingesetzt. Das Kammpolymer kann getrennt oder als Kammpolymer-haltige Zusammensetzung in fester oder flüssiger Form zugegeben werden. Das Kammpolymer wird bevorzugt in Form einer flüssigen Zusammensetzung eingesetzt, insbesondere als wässrige Lösung.

Das Kammpolymer oder die Kammpolymer-haltige Zusammensetzung kann auch in festem Aggregatszustand eingesetzt werden, beispielsweise als Flocken, Pulver, Schuppen, Pellets, Granulate oder Platten. Solche festen Zusätze lassen sich gut transportieren und lagern. Das Kammpolymer kann im festen Aggregatszustand ein Bestandteil einer so genannten Trockenmischung, beispielsweise einer Zementzusammensetzung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das Kammpolymer kann einer hydraulisch abbindenden Zusammensetzung mit oder kurz vor oder kurz nach der Zugabe des Wassers zugefügt werden. Als besonders geeignet hat sich hierbei die Zugabe des Kammpolymers in Form einer wässrigen Lösung oder Dispersion, insbesondere als Anmachwasser oder als Teil des Anmachwassers, herausgestellt. Die Herstellung der wässrigen Lösung erfolgt insbesondere durch nachträgliches Vermengen mit Wasser.

Das Kammpolymer kann einer hydraulisch abbindenden Zusammensetzung jedoch auch vor oder während ihrem Mahlvorgang, beispielsweise dem Mahlprozess von Zementklinker zu Zement, zugegeben werden.

Das erfindungsgemäße Verfahren und die kammpolymerhaltigen Reaktionsprodukte lösen die Aufgaben, die der Erfindung zugrunde liegen. Das erfindungsgemäße Verfahren erfordert insgesamt wegen der guten Durchmischung der Komponenten nur eine relativ kurze Reaktionszeit und ist daher energieeffizient.

Die hohen Ausbeuten an erfindungsgemäßen Kammpolymeren bewirken, dass das erfindungsgemäße Reaktionsprodukt einen niedrigen Anteil an unerwünschten Nebenprodukten und nicht umgesetzten Ausgangsverbindungen aufweist. So kann beispielsweise bei Verwendung von Kaliumacetat als Base nach bereits einer Stunde eine nahezu vollständige Umsetzung des Polyethers erreicht werden. Dies bedeutet im Umkehrschluss, dass das Reaktionsgemisch nahezu keinen freien Polyether und keine oder nur wenige unerwünschte Nebenprodukte enthält. Erfindungsgemäß werden daher kammpolymerhaltige Zusammensetzungen erhalten, die eine verbesserte verflüssigende Wirkung in hydraulisch abbindenden Zusammensetzungen zeigen. Die Verbesserung der verflüssigenden Wirkung ist bei Zementzusammensetzungen wichtig, da dann der Wassergehalt des Zements gesenkt werden kann.

Die kammpolymer-haltigen Zusammensetzungen weisen eine hohe Stabilität auf. Das erfindungsgemäße Verfahren stellt insbesondere hydrolysebeständige Reaktionsprodukte und Kammpolymere bereit. Außerdem kann die Salzfracht des Reaktionsprodukts verringert werden, insbesondere wenn destillierbare Basen eingesetzt werden, die während oder nach der Reaktion aus dem Reaktionsgemisch entfernt werden.
Figur 1 zeigt den Umsatz bei der Veresterung von Polymethacrylsäure (in Prozent, bezogen auf die Summe der Carboxygruppen der PMS) in Abhängigkeit von der Reaktionszeit in Gegenwart verschiedener Basen.
Figur 2 zeigt den Umsatz bei der Veresterung von Polyacrylsäure (in Prozent, bezogen auf die Summe der Carboxygruppen der PAS) in Abhängigkeit von der Reaktionszeit in Gegenwart verschiedener Basen.
Figur 3 zeigt den Umsatz bei der Veresterung von Polyacrylsäure (in Prozent, bezogen auf die Summe der Carboxygruppen der PAS) in Abhängigkeit von der Reaktionszeit in Gegenwart verschiedener Basen.
Figur 4 zeigt den Umsatz verschiedener Kammpolymere mit einem Basispolymer aus Polymethacrylsäure bei der Hydrolyse (in Prozent, bezogen auf die Masse des Polymers vor Beginn der Hydrolysereaktion) in Abhängigkeit von der Reaktionszeit.

### Ausführungsbeispiele

### Beispiele 1 bis 11: Veresterung von Polymethacrylsäure mit verschiedenen Basen

In einem 1000ml Reaktionsgefäß, ausgestattet mit einem mechanischem Rührwerk, Temperaturüberwachung, Heizpilz und Vakuumpumpe, werden 388.13g wässrige 40%ige Polymethacrylsäure (PMS; ca. 1,8 Mol Carbonsäuregruppen enthaltend) mit einem mittleren Molekulargewicht von 5000 vorgelegt. Dazu werden 349.3g (0.35 Mol) Polyether (MPEG 1000, Firma INEOS), 0.03g Entschäumer (Foamex 1488, Firma Evonik Tego Chemie GmbH) und unter Rühren 5.46g 37% (20,6 mMol) Schwefelsäure zugegeben. Das Reaktionsgemisch wird auf 175°C erwärmt, wobei das Wasser abdestilliert wird. Nach 30minütigem Rühren bei dieser Temperatur werden zum Reaktionsgemisch weitere 232.9g (0.23 Mol) MPEG 1000 unter einem Guss hinzu gegeben. Innerhalb weniger Minuten wird ebenfalls eine Mischung bestehend aus 6.47g Jeffamin M2070 (Firma Huntsman) und 6.5g der 50%igen Base vorsichtig zugegeben. Sobald das Reaktionsgemisch wieder 175°C erreicht hat, wird die Reaktion bei einem Unterdruck von 80 mbar bis zum gewünschten Umsatz durchgeführt. Die Schmelze wird mit Wasser auf einen Feststoffgehalt von 40 - 50% verdünnt.

Die Base wurde als 50%ige Lösung in Wasser zum Reaktionsgemisch zugetropft. Es wurden ca. 3.35 Mol% Base eingesetzt, bezogen auf die Carboxygruppen der PMS. Bei Verwendung von NaOH war die eingesetzte Menge Base 81,2 mMol (ca. 4,5 Mol%). Die verwendeten Basen sind in Tabelle 1 gezeigt. Bei der Auswahl der Base werden Löslichkeit und Schmelzpunkt berücksichtigt. Die Tabelle zeigt, dass die Basen eine gute Löslichkeit oder einen geeigneten Schmelzpunkt aufweisen, um in ausreichender Menge eingesetzt zu werden. Der pH-Wert des Reaktionsansatzes nach Zugabe der Base liegt ungefähr zwischen 3,5 und 4,5.

**Tabelle 1: Übersicht über eingesetzte Basen mit Schmelzpunkt und Wasserlöslichkeiten bei 25°C und 80°C. Die Abkürzung "v.s." steht für vollständig löslich.**

| **Beisp.** | **Base** | **Kation** | **Smp. [°C]** | **Wasserlösl. ca.25°C [g/l]** | **Wasserlösl. ca.80°C [g/I]** |
|---|---|---|---|---|---|
| 1 | Hydroxid | Na | 322 | 1260 | |
| 2 | Hydroxid | K | 360 | 1120 | |
| 3 | Formiat | Na | 260 | 972 | 1600 |
| 4 | Formiat | K | 168 | 3310 | 6570 |
| 5 | Acetat | Na | 58*/324 | 762 | |
| 6 | Acetat | K | 292 | 2560 | 4920 |
| 7 | Acetat | Mg | 323 | v.s. | v.s. |
| 8 | Rhodanid | Na | 287 | 1250 | |
| 9 | Rhodanid | K | 175 | 208 | |
| 10 | Carbonat | Na | 160 ** | 217 | |
| 11 | Carbonat | K | 891 | 1120 | |

### Beispiele 12 bis 17: Veresterungsgrad von Polymethacrylsäure mit verschiedenen Basen

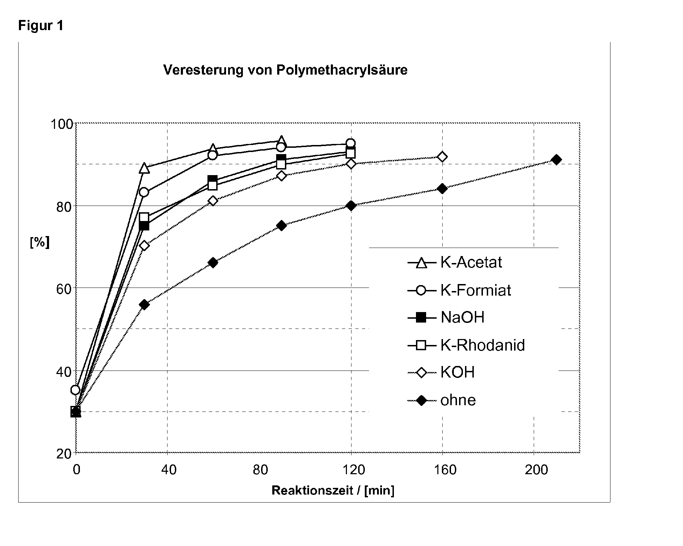

Der Veresterungsgrad der Polymethacrylsäure mit einem mittleren Molekulargewicht von 5000 wurde nach 30, 60 90 und 120 min Reaktionszeit bestimmt. Die Ergebnisse sind in Tabelle 2 und Figur 1 gezeigt. Bei Zugabe von Alkalimetallsalzen zum Reaktionsgemisch ist eine deutliche Verbesserung des Umsatzes beobachtbar. Kaliumsalze zeigen im Vergleich mit Natriumsalzen eine geringfügig bessere Wirkung. Bezüglich der Anionen zeigt sich eine besonders effiziente Umsetzung in Gegenwart von Acetat oder Formiat. In Gegenwart dieser Basen werden Nebenreaktionen unterdrückt.

**Tabelle 2: Ergebnisse Beispiele 12 bis 17. Beispiel 12 ist ein Vergleichsbeispiel.**

| **Bsp.** | **Base** | **Umsatz [%] 30 min** | **Umsatz [%] 60 min** | **Umsatz [%] 90 min** | **Umsatz [%] 120 min** |
|---|---|---|---|---|---|
| 12 | ohne | 56 | 66 | 75 | 80 |
| 13 | NaOH | 75 | 86 | 91 | 93 |
| 14 | KOH | 70 | 81 | 87 | 90 |
| 15 | Kaliumformiat | 89 | 92 | 94 | - |
| 16 | Kaliumacetat | 89 | 92 | 96 | - |
| 17 | Kaliumrhodanid | 77 | 86 | 91 | 93 |

### Beispiele 18 bis 20: Veresterung von Polyacrylsäure mit verschiedenen Basen

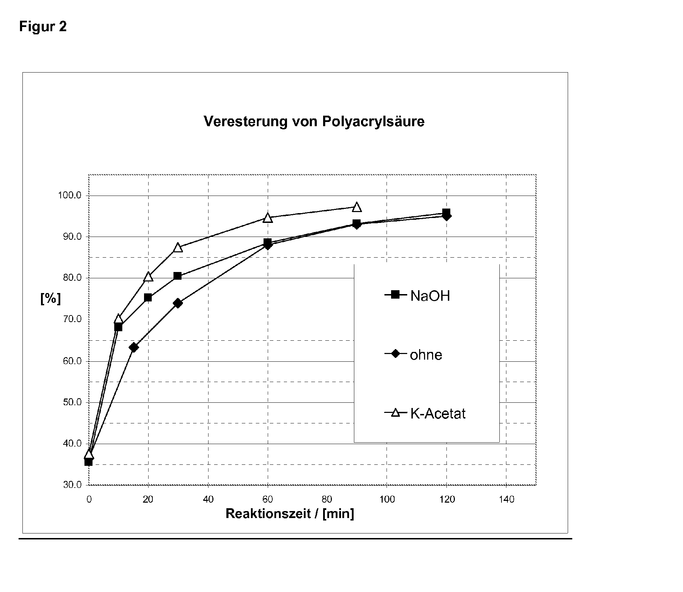

Es wurde eine Veresterungsreaktion gemäß den Beispielen 1 bis 11 durchgeführt, wobei Polyacrylsäure (Firma BASF, Sokalan PA25 CL PN, ca. 50% wässrige Lösung) an Stelle von Polymethacrylsäure eingesetzt wurde. Als Basen wurden NaOH und Kaliumacetat eingesetzt. Die Ergebnisse sind in Tabelle 3 und Figur 2 gezeigt. Kaliumacetat ist deutlich effizienter als NaOH.

**Tabelle 3: Ergebnisse Beispiele 18 bis 20. Beispiel 18 ist ein Vergleichsbeispiel.**

| **Bsp.** | **Base** | **U [%] nach 30min** | **U [%] nach 60min** | **U [%] nach 90min** | **U [%] nach 120min** |
|---|---|---|---|---|---|
| 18 | ohne | 74 | 88 | 92 | 95 |
| 19 | NaOH | 80 | 89 | 93 | - |
| 20 | Kaliumacetat | 87 | 95 | - | - |

### Beispiele 21 bis 24: Veresterung von Polyacrvlsäure mit und ohne Schwefelsäure

Es wurde eine Veresterungsreaktion gemäß den Beispielen 1 bis 11 durchgeführt, wobei Polyacrylsäure an Stelle von Polymethacrylsäure eingesetzt wurde. Als Basen wurden NaOH und Kaliumacetat eingesetzt. Es wurde ein Experiment mit NaOH durchgeführt, bei dem keine Schwefelsäure hinzu gegeben wurde.

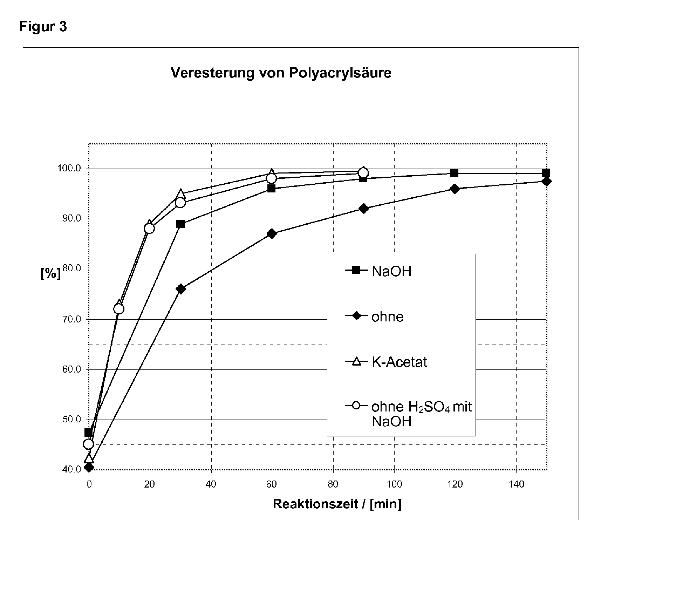

Die Ergebnisse sind in Tabelle 4 und Figur 3 gezeigt. Die Ergebnisse zeigen, dass die Neutralisation mit Kaliumacetat deutlich effizienter als mit NaOH ist. Die zur Reaktion zugegebene Schwefelsäure wirkt als Lösungsvermittler zwischen MPEG und Poly(meth)acrylsäure. Wird die Schwefelsäure weggelassen (Bsp. 23), so erhöht sich die Reaktionsgeschwindigkeit, weil dadurch mehr NaOH für die Neutralisation zur Verfügung steht. Dafür ist mit Inhomogenitäten während der Reaktion zu rechnen, was sich wiederum negativ auf die Geschwindigkeit und Durchführbarkeit auswirken kann.

**Tabelle 4: Ergebnisse Beispiele 21 bis 24. Beispiele 21 ist ein Vergleichsbeispiel.**

| **Bsp.** | **Base** | **U [%] nach 30min** | **U [%] nach 60min** | **U [%] nach 90min** | **U [%] nach 120min** |
|---|---|---|---|---|---|
| 21 | ohne | 76 | 87 | 92 | 96 |
| 22 | NaOH | 89 | 96 | 98 | - |
| 23 | NaOH / ohne H₂SO₄ | 93 | 98 | - | - |
| 24 | Kaliumacetat | 95 | 99 | - | - |

### Beispiel 25 (Vergleichsbeispiel): Durchführung mit Zugabe der Base vor dem Erwärmen

In einem 1000ml Reaktionsgefäß, ausgestattet mit einem mechanischem Rührwerk, Temperaturüberwachung, Heizpilz und Vakuumpumpe, werden 388.13g der wässrigen 40%igen Polymethacrylsäure vorgelegt. Dazu werden 349.3g (3/5 der theoretischen Menge) an MPEG 1000, 0.03g Entschäumer und unter Rühren 5.46g 37% Schwefelsäure und 10.3g Kaliumformiat (66%ige Lösung) in Wasser zugegeben. Das Reaktionsgemisch wird aufgeheizt, wobei das Wasser abdestilliert wird. Bei einer Temperatur von 135°C fällt die Polymethacrylsäure aus und es bildet sich eine nicht mehr rührbare zweiphasige Mischung. Die ausgefallene Polymethacrylsäure konnte danach nicht mehr im MPEG 1000 homogen gelöst werden. Die Durchführung einer Veresterungsreaktion war nicht möglich.

### Beispiel 26: Durchführung mit Zugabe der Base nach dem Erwärmen

In einem 1000ml Reaktionsgefäß, ausgestattet mit einem mechanischem Rührwerk, Temperaturüberwachung, Heizpilz und Vakuumpumpe, werden 388.13g der wässrigen 40%igen Polymethacrylsäure vorgelegt. Dazu werden 349.3g (3/5 der theoretischen Menge) an MPEG 1000, 0.03g Entschäumer und unter Rühren 5.46g 37% Schwefelsäure zugegeben. Das Reaktionsgemisch wird aufgeheizt wobei das Wasser abdestilliert. Wenn das Reaktionsgemisch etwa 140°C erreicht hat, wird diese Temperatur für 30 Minuten gehalten Danach wird 232.9g MPEG (2/5 der theoretischen Menge) unter einem Guss zugegeben und die Temperatur wieder auf 140°C gebracht. Anschließend werden 10.3g Kaliumformiat als 66%ige Lösung in Wasser und Jeffamin M 2070 zugegeben. Danach wird die Temperatur auf 175°C gesteigert und bei einem Unterdruck von 80mbar bis zum gewünschten Umsatz durchgeführt. Danach wird die Polymerschmelze auf 100°C abgekühlt und mit Wasser auf einen Feststoffgehalt von 50% verdünnt.

Polymerumsatz nach Reaktionszeit:

| | |
|---|---|
| 30 Min: | 86% |
| 60 Min: | 92% |
| 90 Min: | 94% |
| 120 Min: | 96% |

Der Vergleich mit Beispiel 25 zeigt die Vorteile des erfindungsgemäßen Verfahrens.

### Beispiel 27: Hydrolysebeständigkeit von Kammpolymeren

Es wurde die Hydrolysebeständigkeit verschiedener Kammpolymere geprüft. Dafür wurde 1 g Kammpolymer (Feststoff) in 10ml 2N Natronlauge gelöst. Die Probe wird stehen gelassen und alle 30 Minuten wird ein Aliquot von ca. 100mg entnommen und mit 4 Tropfen 1 N HCL versetzt. Die Probe wird danach so verdünnt, dass ca. 2-3 mg Polymer/ml in der Probe enthalten sind. Danach wird mittels UPLC (Ultra Performance Liquid Chromatography) der vom Polymer abgespaltene Alkohol (MPEG) gemessen. Vorgängig wird eine Eichkurve für das Polymer sowie für den Alkohol (MPEG) erstellt.

UPLC Parameter:

| | |
|---|---|
| Gerät: | Acquity UPLC mit UV- und Lichtstreu-Detektor (Firma Waters, USA) |
| Säule: | Acquity UPLC BEH300 C18 1.7 µm 2.1 x 100mm (Firma Waters) |
| Eluenten: | A: 0.15% Ameisensäure in Wasser, B: Acetonitril |

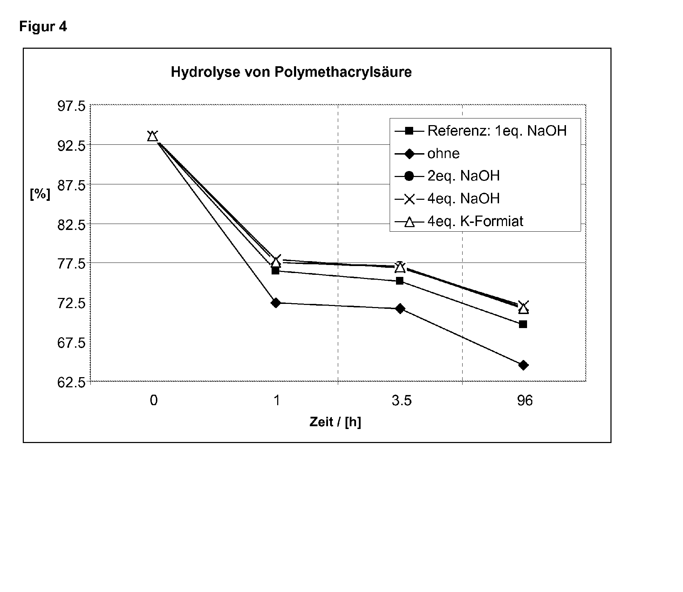

Das Ergebnis ist in Figur 4 dargestellt. Es ist ersichtlich, dass der Alkaliengehalt einen Einfluss auf die Hydrolysegeschwindigkeit der Polymere ausübt. Eine Probe ohne Alkalien hydrolysiert schneller und um ca. 5% mehr als Proben, die Alkalien enthalten. Die Referenz wurde mit 4g NaOH (50%)/mol Säure hergestellt. Werden mehr Alkalien zugesetzt (2fache, 4fache Menge), verändert sich die Hydrolysekinetik nur minimal. Die Hydrolyse stoppt auf einem um 2-3% höheren Niveau. Die Ergebnisse zeigen, dass unter Verwendung von Alkali-Carbonsäuren ein Kammpolymer erhalten wird, dass gegen hydrolytischen Abbau stabiler ist

## Patentansprüche

1. Verfahren zur Herstellung von Kammpolymeren, wobei mindestens eine Polycarbonsäure oder ein Salz davon mit mindestens einem Monohydroxypolyether verestert wird, umfassend die Schritte:
(a) Bereitstellen eines Reaktionsgemischs, dass mindestens eine Polycarbonsäure enthält,
(b) Erwärmen des Reaktionsgemischs auf mindestens 80°C, insbesondere mindestens 100°C,
(c) Zugeben einer Base und
(d) Verestern bei einer Reaktionstemperatur von mindestens 80°C, insbesondere mindestens 100°C, unter Erhalt des Kammpolymers,
wobei dem Reaktionsgemisch in Schritt (a) und/oder (b) mindestens ein Monohydroxypolyether zugegeben wird.

2. Verfahren nach Anspruch 1, wobei die Polycarbonsäure in dem Reaktionsgemisch in Schritt (a) nicht oder im Wesentlichen nicht neutralisiert vorliegt.

3. Verfahren nach Anspruch 1 oder 2, wobei die Base in einer Menge zugesetzt wird, die eine teilweise Neutralisation der Polycarbonsäure bewirkt.

4. Verfahren gemäß mindestens einem der vorhergehenden Ansprüche, wobei dem Reaktionsgemisch gemäß Schritt (a) vor dem Erwärmen in Schritt (b) eine Säure, insbesondere Schwefelsäure oder p-Toluolsulfonsäure, zugegeben wird, wobei die Säure in einer Menge zugegeben wird, dass die Polycarbonsäure nicht oder im wesentlichen nicht neutralisiert vorliegt

5. Verfahren gemäß mindestens einem der vorhergehenden Ansprüche, wobei die Polycarbonsäure Polyacrylsäure, Polymethacrylsäure oder ein Copolymer aus Acrylsäure und Methacrylsäure ist.

6. Verfahren gemäß mindestens einem der vorhergehenden Ansprüche, wobei der Monohydroxypolyether E die Formel (I) aufweist
HO-(R³O)ₓ-R⁴ (I),
wobei R³ unabhängig voneinander eine C₂ - C₄Alkylengruppe bedeutet mit einer Reihenfolge der (R³O)-Einheiten in irgendeiner möglichen Sequenz; wobei R⁴für einen C₁ - C₁₂ Alkyl- oder Cycloalkylrest, einen C₇- C₂₀ Alkylaryl-oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und wobei x für eine Zahl von 3 bis 250, vorzugsweise 5 bis 200 steht.

7. Verfahren gemäß mindestens einem der vorhergehenden Ansprüche, wobei die Veresterung, gegebenenfalls in Verbindung mit einer Amidierung, erfolgt durch die Reaktion von
a) mindestens einer Polycarbonsäure oder einem Salz dieser Polycarbonsäure;
b) mindestens einer Monohydroxyverbindung **E** der Formel (I)
HO-(R³O)ₓ-R⁴ (I)
und gegebenenfalls mindestens einer zusätzlichen Monoaminverbindung **F** der Formel (II)
NH₂-(R³O)ₓ-R⁴ (II)
wobei x, R³ und R⁴ unabhängig voneinander ausgewählt sind wie oben angegeben.

8. Verfahren gemäß mindestens einem der vorhergehenden Ansprüche, wobei das Reaktionsgemisch neben dem Basispolymer folgende Komponenten, bezogen auf 1 Mol Carboxygruppen des Basispolymers, enthält:
(A) 0,05 bis 0,8 Mol Monohydroxypolyether,
(B) gegebenenfalls 0 bis 0,5 Mol Amine,
(C) 10 bis 250 mMol zusätzliche Base, und
(D) gegebenenfalls 0 bis 100 mMol zusätzliche Säure.

9. Verfahren gemäß mindestens einem der vorhergehenden Ansprüche, wobei das Kammpolymer einen Veresterungsgrad des Basispolymers zwischen 5% und 80% aufweist.

10. Verfahren gemäß mindestens einem der vorhergehenden Ansprüche, wobei die Base ausgewählt ist aus Metallcarboxylaten, Metallhydroxiden, Metallcarbonaten, Thiocyanaten und Phosphiten.

11. Verfahren gemäß Anspruch 10, wobei das Metall ein Alkalimetall oder
Erdalkalimetall ist, insbesondere Natrium oder Kalium und/oder das Carboxylat ein Carbonat, Formiat, Acetat, Propionat, Citrat, Adipat, Maleat oder Tartrat ist.

12. Verfahren gemäß mindestens einem der vorhergehenden Ansprüche, wobei
die Base ein Metallcarboxylat ist und wobei das Carboxylat während oder nach der Veresterung in Form der Carbonsäure durch Destillation entfernt wird.

13. Kammpolymerhaltige Zusammensetzung, erhältlich nach einem Verfahren gemäß mindestens einem der vorhergehenden Ansprüche.

14. Hydraulisch abbindende Zementzusammensetzung, enthaltend mindestens eine kammpolymerhaltige Zusammensetzung gemäße Anspruch 13, und mindestens ein hydraulisch abbindendes Bindemittel.

15. Formkörper, erhältlich durch Abbinden und Aushärten einer
Zementzusammensetzung gemäß Anspruch 14.

16. Verwendung einer kammpolymerhaltigen Zusammensetzung gemäß
Anspruch 13 zur Verflüssigung von hydraulisch abbindenden Zementzusammensetzungen.
